Europäisches Patentamt

European Patent Office

Office européen des brevets

(19)

(11) Veröffentlichungsnummer: **0 460 278 B1**

# EUROPÄISCHE PATENTSCHRIFT

(12)

(45) Veröffentlichungstag der Patentschrift: **16.03.94**

(21) Anmeldenummer: **90113207.6**

(22) Anmeldetag: **11.07.90**

(51) Int. Cl.5: **F16F  13/00**, F16F 15/04, B60K 5/12

(54) **Gummilager und ein Kolbenmotor.**

(30) Priorität: **15.05.90 DE 4015528**

(43) Veröffentlichungstag der Anmeldung:
**11.12.91 Patentblatt  91/50**

(45) Bekanntmachung des Hinweises auf die
Patenterteilung:
**16.03.94 Patentblatt  94/11**

(84) Benannte Vertragsstaaten:
**AT BE CH DE ES FR GB IT LI NL SE**

(56) Entgegenhaltungen:
DE-A- 3 805 761
FR-A- 2 618 508
US-A- 4 858 899
US-A- 4 895 353

(73) Patentinhaber: **Firma Carl Freudenberg
Höhnerweg 2-4
D-69465 Weinheim(DE)**

(72) Erfinder: **Hamaekers, Arno
Siedlungsstrasse 60
D-6946 Gorxheimertal(DE)**
Erfinder: **Simuttis, Arnold, Dr.
Pfingstwiese 3
D-6550 Bad Kreuznach(DE)**
Erfinder: **Rudolph, Axel
Finkenweg 23
D-6140 Bensheim 3(DE)**
Erfinder: **Freudenberg, Tillman, Dr.
Hügelstrasse 49
D-6940 Weinheim(DE)**

## Beschreibung

Die Erfindung betrifft ein hydraulisch gedämpftes Gummilager in Kombination mit einem Kolbenmotor nach dem Oberbegriff von Anspruch 1.

Ein solche Gegenstand ist aus der DE-A-36 19 685 bekannt. Bei dem Gummilager läßt sich die Wirklänge der Leitung dabei durch Betätigung eines Ventils beliebig vergrößern und verkleinern, um eine auf Resonanzeffekten beruhende Dämpfungswirkung in einem möglichst breiten Frequenzbereich zu erzielen. In Bezug auf die Isolierung von Schwingungen, die bei Erreichen der Leerlaufdrehzahl des durch das Lager abgestützten Kolbenmotors auftreten, ist das wenig befriedigend insofern, als sich derartige Schwingungen störend in der Karosserie bemerkbar machen.

Aus der US-A-4,858,899 ist ebenfalls ein hydraulisch dämpfendes Gummilager in Kombination mit einem Kolbenmotor bekannt, wobei eine der Verbindungsöffnungen des Gummilagers bedarfsweise durch ein Ventil verschließbar ist. Eine Betätigung des Ventils und somit eine Veränderung der Federrate erfolgt in Abhängigkeit von der Geschwindigkeit des Fahrzeugs und von der Größe der durch die Fahrbahnoberfläche eingeleiteten Schwingungsamplituden. Bei hohen Geschwindigkeiten des Fahrzeugs ist es vorgesehen, daß einer der Durchgänge zwischen den beiden flüssigkeitsgefüllten Kammern durch das Ventil verschlossen ist. Wird das Fahrzeug dagegen mit relativ verringerter Geschwindigkeit über eine unebene Fahrbahn bewegt, wird das Ventil innerhalb des Durchgangs zwischen den beiden flüssigkeitsgefüllten Kammern geöffnet um ein komfortableres Abrollen des Fahrzeugs zu gewährleisten.

Der Erfindung liegt die Aufgabe zugrunde, den Gegenstand gemäß oberbegriff des Anspruchs 1 derart weiterzuentwickeln, daß sich bei guter Dämpfung der fahrbahnerregten, niederfrequenten Schwingungen eine gute Isolierung von Schwingungen ergibt, die von dem Kolbenmotor bei Erreichen der Leerlaufdrehzahl ausgehen.

Diese Aufgabe wird erfindungsgemäß mit den Merkmalen des Anspruchs 1 gelöst. Auf vorteilhafte Ausgestaltungen nehmen die Unteransprüche Bezug.

Bei dem erfindungsgemäßen Gegenstand ist es vorgesehen, daß bei dem Gummilager der kanalartige Durchgang bei Drehzahlen des Kolbenmotors oberhalb der Leerlaufdrehzahl durch das Ventil verschlossen ist und daß der kanalartige Durchgang so groß dimensioniert und mit der Blähelastizität der Begrenzungswände abgestimmt ist, daß, wenn das Ventil geöffnet ist mit Erreichen der Leerlaufdrehzahl des Kolbenmotors die von dem Durchgang umschlossene Flüssigkeitsmasse in eine gleichphasig mit dem Kolbenmotor schwingende Relativbewegung mit einer Amplitude gelangt, die größer ist als die Amplitude der Bewegung des Kolbenmotors, multipliziert mit dem Verhältnis aus dem kolbenartig wirksamen Verdrängungsquerschnitt der Begrenzungswände und den Querschnitt des kanalartigen Durchgangs, wobei der kolbenartig wirksame Verdrängungsquerschnitt demjenigen Flächenbestandteil der Begrenzungswände entspricht, der beim Ein- oder Ausfedern des Gummilagers kolbenartig wirksam ist.

Der Betrag der dynamischen Steifigkeit des Gummilagers ist hierdurch bei Erreichen der Leerlaufdrehzahl kleiner als bei Motorstillstand, wodurch die von dem Kolbenmotor bei Erreichen der Leerlaufdrehzahl ausgehenden Schüttelbewegungen in ausgezeichneter Weise isoliert werden. Resonanzüberhöhte Schwingungsausschläge des Motors sind bei Erreichen dieses Betriebszustandes nicht zu befürchten. Die Betriebssicherheit ist daher in keiner Weise gefährdet. Der Verdrängungsquerschnitt bezeichnet in diesem Zusammenhang denjenigen Flächenbestandteil des Federelementes, der bei einer Ein- oder Ausfederung des Auflagers kolbenartig wirksam ist.

Aus einem Fachaufsatz von Spurk/Andrä, "Theorie des Hydrolagers", veröffentlicht in Automobilindustrie 5/85, Bild 3, Seite 554 ist es bekannt, daß die dynamische Steifigkeit bei hydraulisch gedämpften Gummilagern der vorstehend zur Diskussion stehenden Art unterhalb der Resonanzfrequenz der in der Leitung enthaltenen Flüssigkeitsmasse eine Absenkung erfährt. Die Ausnutzung dieses Effektes für die Erzielung einer guten Isolierung des Leerlaufschüttelns wird in dem genannten Aufsatz nicht erwähnt.

Im Rahmen der vorliegenden Erfindung ist es nunmehr vorgesehen, diesen Effekt in gezielter Weise auszunutzen und die Abstimmung so vorzunehmen, daß sich bei Erreichen der Leerlaufdrehzahl des abgestützten Kolbenmotors eine größtmögliche Weichheit des den Kolbenmotor abstützenden Gummilagers ergibt.

In konstruktiver Hinsicht ist es gleichgültig, ob das Ventil in dem Arbeits-, in dem Ausgleichsraum oder einer Zwischenzone angeordnet ist weil sich hiervon unabhängig bei einer Betätigung stets eine Blockierung des kanalartigen Durchgangs ergibt.

Der Durchgang sollte einen Durchtrittsquerschnitt haben, der wenigstens 100 mm² umfaßt. Hierzu ist anzumerken, daß die Massenwirkung des Durchgangs durch die Formel

$$\varsigma\,o \times L\,/\,A$$

charakterisiert ist. $\varsigma$ o bedeutet hierin die Dichte der in dem Durchgang enthaltenen Flüssigkeit, L die Länge des Durchgangs und A den Querschnitt des Durchgangs. In Verbindung mit der Blähelastizität der Wandungen der Arbeitsräume und dessen hydraulischem Verdrängungsquerschnitt ist es somit grundsätzlich möglich, eine gleichwertig erscheinende Abstimmung auf eine bestimmte Frequenz unter Verwendung einer Leitung von großer Länge und großem Querschnitt vorzunehmen oder von kleiner Länge und kleinem Querschnitt. Im Rahmen der vorliegenden Erfindung gelangt bevorzugt ein kanalartiger Durchgang zur Anwendung, der einen Querschnitt aufweist, welcher so groß ist, wie unter konstruktiven Gesichtspunkten irgend möglich. Hierdurch werden bei Einleitung von Schwingungen in das Gummilager im Vergleich zu üblichen Gummilagern erheblich vergrößerte Flüssigkeitsmassen mit vergleichsweise verminderter Geschwindigkeit hin- und herverlagert, was eine Absenkung der dynamischen Federsteifigkeit bei Erreichen der Leerlaufdrehzahl bedingt. Unter diesem Gesichtspunkt hat es sich als zweckmäßig bewährt, wenn der Durchgang einen Querschnitt aufweist, der wenigstens 100 mm$^2$ umfaßt. Bei Drehzahlen oberhalb der Leerlaufdrehzahl ist der Durchgang durch ein Ventil verschlossen und nicht aktiv. Für die Flüssigkeitsbewegung zwischen den Arbeitsräumen steht nur die parallel geschaltete Verbindungsöffnung zur Verfügung. Diese ist bei kanalartiger Ausbildung zweckmäßig ebenfalls so groß wie möglich dimensioniert, was aus den angegebenen Gründen eine gute Dämpfung von resonanzüberhöhten Schwingungsausschlägen des Motors ermöglicht.

Das Entlastungsventil sollte einen Querschnitt haben, der wenigstens so groß ist wie der Querschnitt des Durchgangs. Es vermag bei einer solchen Ausbildung die Relativbewegung der gegebenenfalls durchtretenden Flüssigkeitsbestandteile nicht zusätzlich zu hemmen.

Das Gummilager kann hinsichtlich seines äußeren Aufbaus an die Form der üblichen Hydrolager angelehnt sein. Bei diesen sind die beiden Arbeitsräume durch eine im wesentlichen eben ausgebildete Trennwand voneinander getrennt und durch Gummiwandungen nach außen abgeschlossen, von denen wenigstens die eine hohlkegelig gestaltet ist. Der Durchgang ist hierbei zumeist von Bestandteilen der Trennwand umschlossen.

Bei Ausführungen, bei denen beide Arbeitsräume durch Aussparungen eines einzigen Gummikörpers gebildet sind, der in dem radialen Zwischenraum zwischen zwei einander umschließenden Stützhülsen angeordnet ist, hat es sich demgegenüber als vorteilhaft bewährt, wenn der Durchgang zumindest teilweise durch eine Ausnehmung der äußeren Stützhülse gebildet ist. Dem vorliegend zum Tragen kommenden Wunsch nach einem großen Querschnitt und einer großen Länge des Durchgangs läßt sich hierdurch am besten entsprechen. Eine solche Ausnehmung kann zumindest einen Abschnitt aufweisen, der sich im wesentlichen in Umfangsrichtung erstreckt. Zusätzlich oder alternativ kann die Ausnehmung zumindest einen Abschnitt aufweisen, der sich im wesentlichen in Längsrichtung der Stützhülse erstreckt.

Das Ventil wird so betätigt, daß der Durchgang nur bei Erreichen der Leerlaufdrehzahl des Kolbenmotors freigegeben ist. Bei anderen Betriebszuständen des Kolbenmotors ist die Dämpfungsöffnung demgegenüber verschlossen und für die schwingungsbedingte Hin- und Herbewegung von Flüssigkeitsbestandteilen zwischen den beiden Arbeitsräumen steht lediglich die zum Durchgang parallel geschaltete Verbindungsöffnung zur Verfügung. Diese ist so dimensioniert, daß Resonanzbewegungen des abgestützten Kolbenmotors bei guter Isolierung akustisch störender Schwingungen weitestgehend unterdrückt werden. Blenden und kanalartige Ausbildungsformen sind möglich. Sie können die eigentliche Dämpfungsöffnung in konstruktiver Hinsicht ergänzen oder separat von dieser angebracht sein.

Der Gegenstand der Erfindung wird nachfolgend anhand der Zeichnung verdeutlicht. Es zeigen:

Figur 1
Ein Diagramm, in welchem die dynamische Steifigkeit über der Frequenz aufgetragen ist.

Figuren 2 bis 4
Einige beispielhafte Ausführungen des Gummilagers in quergeschnittener Darstellung.

Figur 5
Eine beispielhafte Ausführung eines Einbauteiles, welches in einem Gummilager von zylindrischem Außenumriß zur Anwendung gelangen kann.

Figur 6
Eine beispielhafte Ausführung eines Gummilagers in längsgeschnittener Darstellung.

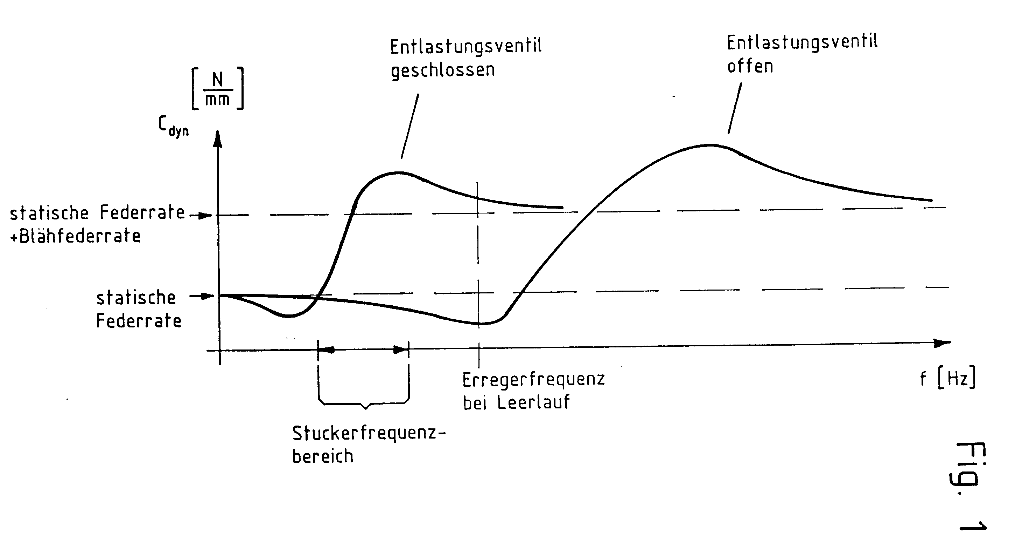

In dem in Figur 1 gezeigten Diagramm ist die dynamische Steifigkeit aufgetragen über der Frequenz der unter normalen Betriebsbedingungen eines Kolbenmotors eingeleiteten Schwingungen. Das Diagramm weist zwei Kurvenverläufe auf. Der linke Kurvenverlauf zeigt das Verhalten des Gummilagers bei geschlossenem Ventil. Dabei ergibt sich im Bereich der Stuckerfrequenzen ein steifes, dämpfendes System. Durch Öffnen des Ventils läßt sich die Kurve soweit zu höheren Frequenzen verschieben, daß das Minimum der Steifigkeit mit der Erregerfrequenz des Systems im Leerlaufzustand des abgestützten Kolbenmotors zusammenfällt. Das Gummilager weist hierdurch eine besonders große Nachgiebigkeit und Weichheit bei Erreichen der Leerlaufdrehzahl auf, wodurch eine optimale Entkopplung der Leerlaufschüttelbewegungen des Kolbenmotors erreicht wird.

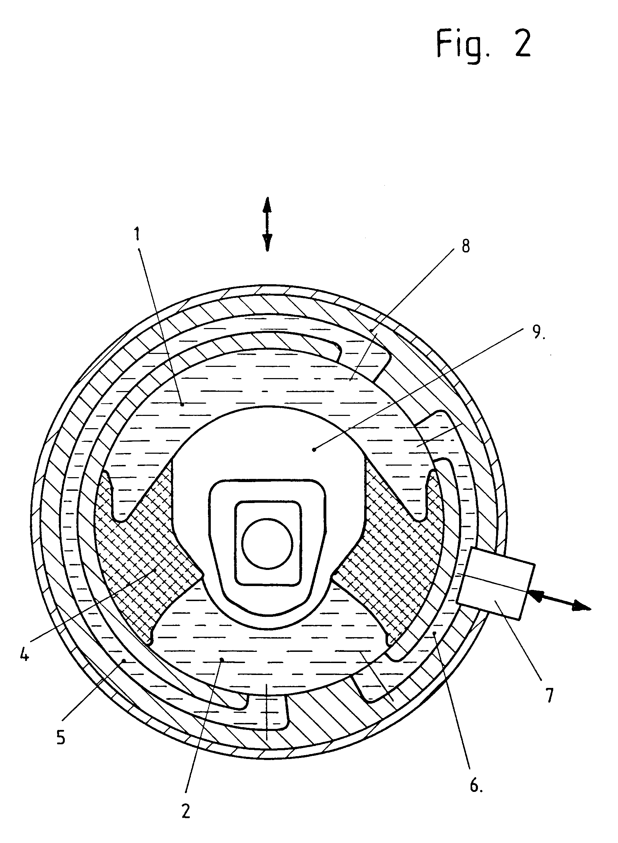

Das in Figur 2 gezeigte Gummilager ist hinsichtlich seiner äußeren Gestalt an die Bauform der Buchsenlager angepaßt. Es umfaßt ein Innenteil 9 und ein Außenteil 8 aus metallischem Werkstoff, die einander koaxial umschließen und dem Anschluß der aufeinander abzustützenden, in einer Relativbewegung befindlichen Maschinenteile dienen. Das Innenteil 9 und das Außenteil 8 sind durch einen Tragkörper 4 aus gummielastischem Werkstoff und mit einander verbunden. Der Tragkörper 4 füllt den gesamten Zwischenraum zwischen dem Innenteil 9 und dem Außenteil 8 aus, mit Ausnahme der im Inneren angeordneten und nach außen abgeschlossenen Arbeitsräume 1, 2, die mit einer hydraulischen Flüssigkeit gefüllt sind und durch eine Verbindungsöffnung 5 sowie einen kanalartigen Durchgang 6 in flüssigkeitsleitender Verbindung stehen. Das Gummilager ist für die Abstützung eines Kolbenmotors bestimmt. Dieser weist einen Sensor auf, der bei Erreichen der Leerlaufdrehzahl ein Signal abgibt. Das Signal wird einem Ventil 7 zugeführt, welches den Durchgang 6 bei Erreichen der Leerlaufdrehzahl freigibt. Bei anderen Betriebszuständen ist der Durchgang 6 demgegenüber verschlossen.

Das Gummilager ist während seiner bestimmungsgemäßen Verwendung so eingebaut, daß die Arbeitsräume 1, 2 in Richtung der bestimmungsgemäß aufzunehmenden Schwingungen hintereinanderliegend angeordnet sind. Die Richtung ist durch einen Doppelpfeil angedeutet.

Zur Funktion ist folgendes auszuführen:
Bei Erreichen der Leerlaufdrehzahl des abgestützten Kolbenmotors wird das Ventil 7 geöffnet und die Arbeitsräume 1, 2 stehen sowohl durch die Verbindungsöffnung 5 als auch durch den Durchgang 6 in einer flüssigkeitsleitenden Verbindung. Die Arbeitsräume 1, 2 sind im Bereich der sich quer zur Achse des Innenteiles 9 und des Außenteiles 8 erstreckenden Stirnseite durch dünne Wandungen begrenzt, welche Bestandteile des gummielastischen Tragkörpers 4 bilden und blähelastisch sind. Die Wandungen erfahren dementsprechend bei Einleitung der betriebsbedingt aufzunehmenden Schwingungen abwechselnd eine elastische Aufblähung, was zur Folge hat, daß die in der Verbindungsöffnung 5 und die in dem Durchgang 6 enthaltenen Flüssigkeitsmassen normalerweise keine Relativverschiebung erfahren, die der erregenden Schwingungen in synchroner Weise folgt. Im Normalfall ist vielmehr davon auszugehen, daß in Abhängigkeit von der Frequenz der eingeleiteten Schwingungen sowie in Abhängigkeit von der Größe der jeweils in den Öffnungen enthaltenen Flüssigkeitsmassen sowie der Federelastizität der Wandungen eine mehr oder weniger ausgeprägte Phasenschiebung zwischen der erregenden Schwingung und der Relativbewegung der Flüssigkeitsmassen auftritt. Die diesbezüglichen Zusammenhänge sind an sich bekannt.

Abweichend vom bekannten Gegenstand ist gemäß der Erfindung bei dem Gummilager ein Durchgang 6 vorgesehen, welcher nur bei Erreichen der Leerlaufdrehzahl durch Betätigung eines Ventils 7 freigegeben wird und welche so dimensioniert ist, daß die umschlossene Flüssigkeitsmasse bei Erreichen der Leerlaufdrehzahl des Kolbenmotors in eine gleichphasig mit diesem schwingende Relativbewegung einer Amplitude gelangt, die größer ist als die Amplitude der Bewegungen des Kolbenmotors, multipliziert mit dem Verhältnis aus dem Verdrängungsquerschnitt der Blähfedern, d.h. der vorstehend angesprochenen Wandungen, und dem Querschnitt des Durchgangs. Bei Erreichen der Leerlaufdrehzahl verhält sich das Gummilager dadurch weicher als bei Motorstillstand. Das bei Erreichen der Leerlaufdrehzahl auftretende Motorschütteln läßt sich hierdurch sehr gut isolieren.

Bei Erreichen höherer Motordrehzahlen wird der Durchgang 6 durch Betätigung des Ventils 7 verschlossen. Als Verbindung zwischen den Arbeitsräumen steht anschließend nur noch die Verbindungsöffnung 5 zur Verfügung. Das Gummilager erfährt dementsprechend hinsichtlich seiner elastischen Nachgiebigkeit eine gewissen Verhärtung. Diese ist so gering wie möglich bemessen, um zu erreichen, daß akustisch störende Schwingungen nicht in nennenswertem Maße übertragen werden. Hiervon unabhängig ist die Verbindungsöffnung 5 so gestaltet, daß die enthaltene Flüssigkeitsmasse beim Auftreten kritischer Motorschwingungen in eine hierzu gegenphasige Resonanzbewegung gelangt. Entsprechende Schwingungen erfahren dadurch eine gute Dämpfung.

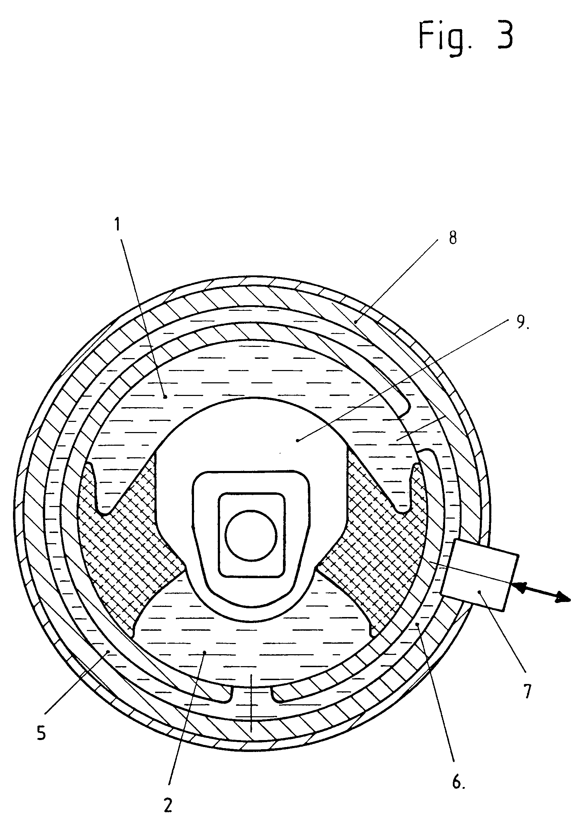

Die in Figur 3 gezeigte Ausführung unterscheidet sich von der vorstehend beschriebenen im wesentlichen dadurch, daß die Verbindungsöffnung und der kanalartige Durchgang (5, 6) ineinander übergehend ausgebildet sind und gemeinsame Ein- und Auslaßöffnungen haben. Die Herstellung ist hierdurch wesentlich vereinfacht. Die Funktion des Gummilagers entspricht im übrigen der vorstehend beschriebenen.

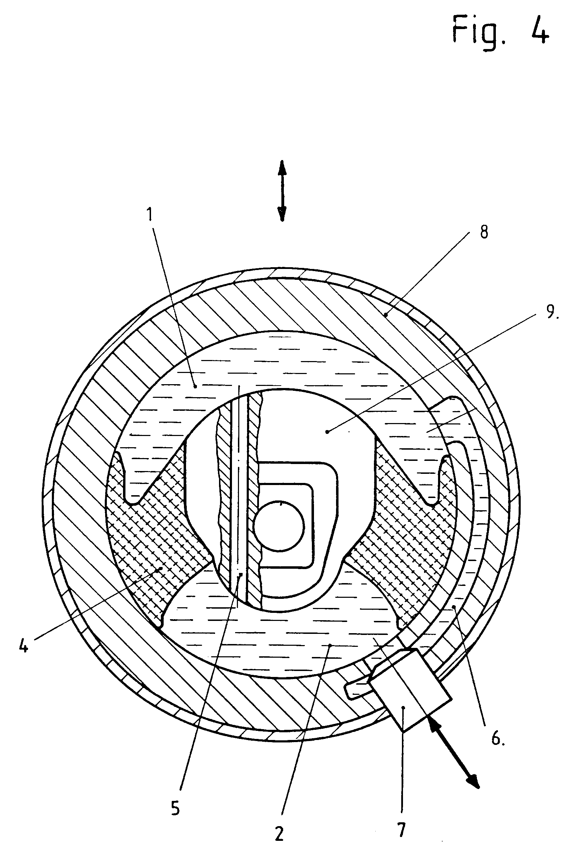

Figur 4 unterscheidet sich von den vorstehend beschriebenen im wesentlichen dadurch, daß die Verbindungsöffnung 5 dem Innenteil 9 zugeordnet ist und sich parallel zur Richtung der bestimmungsgemäß aufzunehmenden Schwingungen erstreckt. Diese sind hinsichtlich ihrer Richtung durch einen Doppelpfeil angedeutet und die parallele Zuordnung bedingt ein verbessertes Ansprechen der Dämpfungswirksamkeit der Verbindungsöffnung 5.

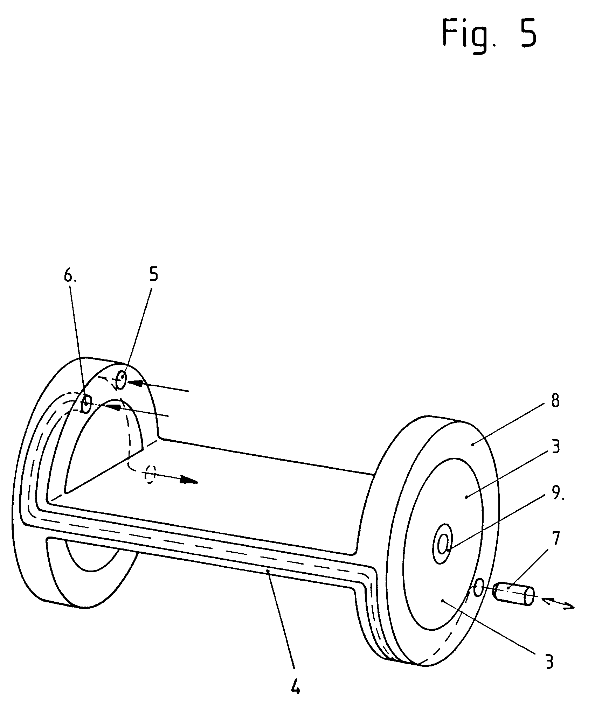

In Figur 5 ist ein Einbauteil in einer perspektivischen Ansicht von oben wiedergegeben, welches bei der Herstellung eines Gummilagers vom Typ der Buchsenlager zur Anwendung gelangen kann.

Diesem Typ entsprechen auch die vorstehend beschriebenen Ausführungen nach den Figuren 1 bis 4.

Das in Figur 5 gezeigte Einbauteil besteht im wesentlichen aus dem Innenteil 9 und dem Außenteil 8, welche jeweils aus Metall bestehen und welche durch einen Tragkörper 4 aus Gummi und einander festgelegt und verbunden sind. Der Tragkörper 4 kann durch unmittelbares Anvulkanisieren mit dem Innenteil 9 und dem Außenteil 8 verbunden sein.

Der Außenteil 8 umschließt eine Verbindungsöffnung 5 und einen Durchgang 6. Beide werden durch Ausnehmungen des Außenteiles 8 gebildet, wobei der Durchgang 6 ineinander übergehend zwei Abschnitte aufweist, die sich im wesentlichen in Umfangsrichtung des Außenteiles 8 erstreckt und einen Abschnitt, der sich im wesentlichen parallel zur Längsrichtung des Innenteiles 9 erstreckt, welches vorliegend durch eine Stützhülse gebildet ist. Das Betätigungsglied des Ventils 7 ist schematisch angedeutet. Es kann den Durchgang 6 auch in einer von der dargestellten Ausführung abweichenden Weise zugeordnet sein. Die die Arbeitsräume während der bestimmungsgemäßen Verwendung stirnseitig abschließenden, blähelastischen Wandungen sind mit 3 bezeichnet. Sie bilden einen einstückigen Bestandteil des Tragkörpers 4 und bestehen aus Gummi.

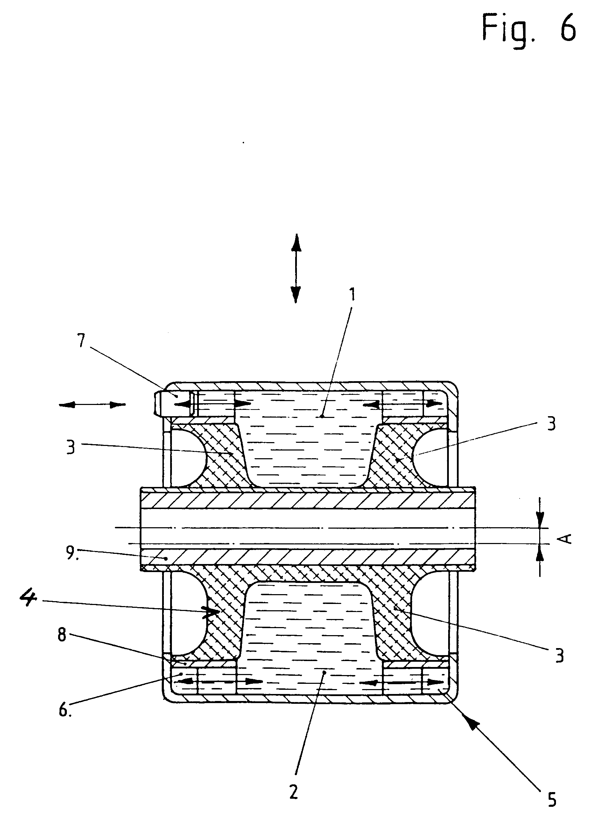

Figur 6 zeigt ein Gummilager in längsgeschnittener Darstellung, welches ebenfalls als Buchsenlager ausgebildet ist. Das Innenteil 9 besteht aus einem Rohr, welches auf seiner ganzen Länge von dem Außenteil 8 umschlossen und mit diesem durch den Tragkörper 4 aus gummielastischem Werkstoff verbunden ist. Der Tragkörper 4 enthält in Richtung der bestimmungsgemäß aufzunehmenden Schwingungen hintereinanderliegend angeordnete Arbeitsräume 1, 2, welche stirnseitig durch Wandungen 3 verschlossen, mit einer hydraulischen Flüssigkeit gefüllt und durch eine kanalartig ausgebildete Verbindungsöffnung 5 und einen hierzu parallel geschaltete, kanalartig ausgebildeten Durchgang 6 verbunden sind. Sowohl die Verbindungsöffnung 5 als auch der Durchgang 6 werden durch sich in Umfangsrichtung erstreckende Ausnehmungen des Außenteiles 8 gebildet, welche im Bereich ihrer Mündungen axial in Richtung des jeweiligen Arbeitsraumes 1 bzw. 2 geöffnet sind Der Durchgang 6 ist durch ein signalbetätigbares Ventil 7 verschließbar. Dieses ist im Bereich der einen Mündung des Durchgangs 6 angeordnet.

Das in Figur 6 gezeigte Gummilager entspricht der herstellungsbedingten Form. Diese ist vor allem dadurch gekennzeichnet, daß es in dem Teil 9 in bezug auf das Außenteil 8 um ein Maß A relativ nach oben verschoben ist. Das Maß A ist so gewählt, daß sich nach dem Aufbringen der bestimmungsgemäß abzutragenden Last eine konzentrische Zuordnung des Innenteiles 9 im Außenteil 8 ergibt. Die Relativbeweglichkeit des Innenteiles 9 in bezug auf das Außenteil 8 ist hierdurch in allen Richtungen von übereinstimmender Größe.

Das Außenteil 8 wird außenseitig von einem Blechkörper umschlossen, welcher die Arbeitsräume 1, 2, die Verbindungsöffnung 5 und den Durchgang 6 zugleich nach außen abschließt. Er besteht aus metallischem Werkstoff.

## Patentansprüche

1. Gummilager und ein Kolbenmotor, wobei bei dem Gummilager zwei flüssigkeitsgefüllte Arbeitsräume (1, 2) vorgesehen sind, die durch elastisch aufblähbare Begrenzungswände (3) begrenzt und durch wenigstens zwei parallel geschaltete Verbindungsöffnungen verbunden sind, wobei die Verbindungsöffnungen einen kanalartigen Durchgang (6) umfassen, der durch ein signalbetätigbares Ventil (7) verschließbar ist, dadurch gekennzeichnet, daß der kanalartige Durchgang (6) bei Drehzahlen des Kolbenmotors oberhalb der Leerlaufdrehzahl durch das Ventil (7) verschlossen ist und der kanalartige Durchgang (6) so groß dimensioniert und mit der Blähelastizität der Begrenzungswände (3) abgestimmt ist, daß, wenn mit Erreichen der Leerlaufdrehzahl des Kolbenmotors das Ventil (7) geöffnet ist, die von dem Durchgang (6) umschlossene Flüssigkeitsmasse in eine gleichphasig mit dem Kolbenmotor schwingende Relativbewegung mit einer Amplitude gelangt, die größer ist als die Amplitude der Bewegungen des Kolbenmotors, multipliziert mit dem Verhältnis aus dem kolbenartig wirksamen Verdrängungsquerschnitt der Begrenzungswände (3) und dem Querschnitt des kanalartigen Durchgangs (6), wobei der kolbenartig wirksame Verdrängungsquerschnitt demjenigen Flächenbestandteil der Begrenzungswände entspricht, der beim Ein- oder Ausfedern des Gummilagers kolbenartig wirksam ist.

2. Gummilager und Kolbenmotor nach Anspruch 1, dadurch gekennzeichnet, daß der kanalartige Durchgang (6) einen Querschnitt aufweist, der wenigstens 100 mm$^2$ umfaßt.

3. Gummilager und Kolbenmotor nach Anspruch 1 oder 2, dadurch gekennzeichnet, daß bei dem Gummilager die Arbeitsräume durch Aussparungen eines Gummikörpers gebildet sind, der in dem radialen Zwischenraum zwischen zwei einander umschließenden Stützhülsen (8, 9) angeordnet ist, und daß der kanalartige Durchgang (6) zumindest teilweise durch eine Ausnehmung der äußeren Stützhülse (8) gebildet ist.

4. Gummilager und Kolbenmotor nach Anspruch 3, dadurch gekennzeichnet, daß die Ausnehmung zumindest einen Abschnitt aufweist, der sich im wesentlichen in Umfangsrichtung erstreckt.

5. Gummilager und Kolbenmotor nach Anspruch 3 oder 4, dadurch gekennzeichnet, daß die Ausnehmung zumindest einen Abschnitt aufweist, der sich im wesentlichen in Längsrichtung der Stützhülse erstreckt.

**Claims**

1. A rubber mount and a piston motor, wherein in the case of the rubber mount two liquid-filled operating chambers (1, 2) are provided, which are bounded by elastically bloatable boundary walls (3) and are connected by at least two connection openings linked in parallel, the connection openings comprising a channel-like passage (6) which can be closed by a valve (7) which can be actuated by a signal, characterized in that the channel-like passage (6) is closed by the valve (7) at speeds of the piston motor above the idling speed, and the channel-like passage (6) is dimensioned to be sufficiently large and is matched to the bloating elasticity of the boundary walls (3) in such a way that, if upon reaching the idling speed of the piston motor the valve (7) is open, the liquid mass enclosed by the passage (6) passes into a relative motion vibrating in phase with the piston motor at an amplitude which is greater than the amplitude of the motions of the piston motor, multiplied by the ratio of the displacement cross-section of the boundary walls (3) acting in the manner of a piston and the cross-section of the channel-like passage (6), the displacement cross-section acting in the manner of a piston corresponding to that constituent of the area of the boundary walls which acts in the manner of a piston during the compression or rebound of the rubber mount.

2. A rubber mount and a piston motor according to claim 1, characterized in that the channel-like passage (6) has a cross-section which spans at least 100 mm$^2$.

3. A rubber mount and a piston motor according to either of claims 1 and 2, characterized in that, in the case of the rubber mount, the operating chambers are formed by cutouts in a rubber body which is arranged in the radial gap between two mutually surrounding support sleeves (8, 9), and in that the channel-like passage (6) is formed at least partially by a recess in the outer support sleeve (8).

4. A rubber mount and a piston motor according to claim 3, characterized in that the recess has at least one section which extends substantially in the circumferential direction.

5. A rubber mount and a piston motor according to either of claims 3 and 4, characterized in that the recess has a least one section which extends substantially in the longitudinal direction of the support sleeve.

**Revendications**

1. Support en caoutchouc et moteur à piston, où deux espaces de travail (1, 2) remplis de liquide sont prévus au niveau du support en caoutchouc, lesquels sont délimités par des parois de délimitation (3) pouvant se gonfler élastiquement, et reliés par au moins deux ouvertures de communication montées de manière parallèle, les ouvertures de communication comprenant un passage (6) semblable à un canal pouvant être obturé par une soupape (7) commandable par un signal, caractérisé en ce que, pour les régimes du moteur à piston qui sont au-dessus de la vitesse à vide, le passage (6) semblable à un canal est obturé par la soupape (7), et qu'il est pourvu de dimensions telles, et ainsi adapté à la force élastique de gonflement des parois de délimitation (3) que lorsque, la vitesse à vide du moteur à piston étant atteinte, la soupape (7) est ouverte, la masse de liquide enfermée par le passage (6) entre dans un mouvement oscillatoire relatif en phase avec le moteur à piston, pourvu d'une amplitude qui est plus grande que l'amplitude des mouvements du moteur à piston, multipliée par le rapport de la section transversale de déplacement des parois de délimitation, active à la manière d'un piston, et de la section transversale du passage (6) semblable à un canal, la section transversale de déplacement, active à la manière d'un piston, correspondant à la partie constitutive de la surface des parois de délimitation qui, lorsque le support en caoutchouc se compresse et se détend, agit comme un piston.

2. Support en caoutchouc et moteur à piston selon la revendication 1, caractérisés en ce que le passage (6) semblable à un canal est pourvu d'une section transversale qui comprend au moins 100 mm$^2$.

3. Support en caoutchouc et moteur à piston selon la revendication 1 ou 2, caractérisés en ce que, au niveau du support en caoutchouc, les espaces de travail sont constitués par des évidements d'un corps en caoutchouc situé dans l'intervalle radial existant entre deux manchons de soutien (8, 9) dont l'un entoure l'autre, et que le passage (6) semblable à un canal est constitué, au moins en partie, par un évidement du manchon de soutien externe (8).

4. Support en caoutchouc et moteur à piston selon la revendication 3, caractérisés en ce que l'évidement est pour'vu d'au moins un segment qui s'étend essentiellement dans le sens de la circonférence.

5. Support en caoutchouc et moteur à piston selon la revendication 3 ou 4, caractérisés en ce que l'évidement est pourvu d'au moins un segment qui s'étend essentiellement dans le sens longitudinal du manchon de soutien.

Fig. 1

EP 0 460 278 B1

Fig. 2

Fig. 3

Fig. 4

Fig. 5

Fig. 6